# FASCICULE DE BREVET EUROPEEN

(11) **EP 2 209 597 B1**
(45) Date de publication et mention de la délivrance du brevet: **26.07.2017**
(21) Numéro de dépôt: 08841713.4
(22) Date de dépôt: 08.10.2008
(51) Int. Cl.: B27D 1/00, B29C 45/14

(54) **PROCÉDÉ DE REVÊTEMENT D'UNE PIÈCE PAR UNE COUCHE DE MATIÈRE LIGNEUSE**
VERFAHREN ZUR BESCHICHTUNG EINES TEILS MIT EINER SCHICHT AUS HOLZARTIGEM MATERIAL
METHOD OF COATING A PART WITH A LAYER OF LIGNEOUS MATERIAL

(30) Priorité: 15.10.2007 FR 0707215
(43) Date de publication de la demande: 28.07.2010
(60) Demande divisionnaire: 12194898.8
(73) Titulaire: Faurecia Intérieur Industrie, 92000 Nanterre (FR)
(72) Inventeur: DURAND, Nathalie, F-60114 Meru (FR); PICCIN, Hugo, F-60114 Meru (FR)
(74) Mandataire: Lavoix
(86) Numéro de dépôt international: PCT/FR2008/051819
(87) Numéro de publication internationale: WO 2009/053610

(56) Documents cités:
- EP-A1- 1 985 426
- DE-A1- 19 607 051
- DE-A1- 19 929 971
- DE-U1- 29 919 712
- FR-A- 899 117
- FR-A- 1 405 715
- FR-A- 2 760 208
- FR-A- 2 868 733
- US-A- 2 266 699
- US-A1- 2004 209 063
- US-A1- 2008 268 273

## Description

La présente invention concerne un procédé de fabrication d'une pièce ayant une surface revêtue d'une couche de matière ligneuse, selon le préambule de la revendication 1. Un tel procédé est connu du document EP1985426A1. Pour des raisons esthétiques, on souhaite souvent munir des pièces d'une couche de matière ligneuse, telle que le bois, par exemple sur des parties du tableau de bord ou des garnitures intérieures d'un véhicule automobile, ces pièces ayant parfois une forme non développable.

En général, ces pièces sont formées dans un procédé dans lequel certaines opérations au moins sont manuelles, telles que le vernissage, le ponçage et l'application de couches de vernis. Ces opérations sont nécessaires parce que, lorsque la couche de matière ligneuse est courbée, il apparaît fréquemment soit une fissuration des fibres de matière ligneuse, avec rupture ou décohésion des fibres, soit des plis ; il faut alors que ces couches de matière ligneuse soient revêtues d'un vernis pulvérisé sur la matière ligneuse en grande quantité puisqu'il doit remplir les fissures et interstices existant dans la matière ligneuse.

On connaît aussi un procédé dans lequel une couche superficielle est réalisée à l'aide plusieurs couches de matière ligneuse comprimées en une ou plusieurs étapes. Cette couche superficielle est ensuite collée sur un support rigide ou utilisée pour un surmoulage. La pièce obtenue est alors retouchée à la main, pour le rebouchage des fissures éventuelles avec un mastic ou de la pâte à bois. Ensuite, la pièce est vernie à l'aide d'un vernis classique par exemple à base de polyuréthanne, de polyester ou cellulosique.

Une telle fabrication présente de nombreux inconvénients, puisqu'elle nécessite l'application de plusieurs couches de vernis, avec un égrenage à la main entre les couches. Ainsi, les fissures des coins donnent une impression de mauvaise qualité. Certaines formes convexes ou concaves ne peuvent pas être réalisées. En outre, le toucher obtenu donne une sensation synthétique, c'est-à-dire très lisse, sans que les aspérités de la matière ligneuse puissent être senties, à moins que la couche de vernis ne soit très mince, situation dans laquelle sa fonction protectrice, notamment contre les ultraviolets, est réduite.

Pour remédier à ces principaux inconvénients, c'est-à-dire pour éviter de nombreuses étapes de fabrication dont certaines au moins sont manuelles, on a déjà suggéré d'appliquer une couche souple à base d'une résine de synthèse à la surface extérieure d'une couche de matière ligneuse, puis d'associer le complexe obtenu à la pièce dans une opération de compression, éventuellement avec chauffage. A cet effet, la couche superficielle placée sur la couche de matière ligneuse est souple pour qu'elle s'adapte à la forme que prend la surface de la couche de matière ligneuse lorsqu'elle est placée entre la surface de la pièce à revêtir et le moule.

Bien qu'un tel procédé évite des opérations manuelles de vernissage et polissage à la main, on s'est rendu compte que sa mise en oeuvre n'était pas efficace lorsque la surface n'est pas plane, en particulier parce qu'il se forme des fissures dans la matière ligneuse aux endroits courbés. A ce moment, les fissures ne peuvent plus être réparées à cause de la présence de la couche souple extérieure. Pour cette raison, il ne semble pas qu'un tel procédé soit effectivement utilisé avec des couches de matière ligneuse. En outre, le toucher obtenu est lisse, c'est-à-dire différent de celui de la matière ligneuse, lorsque le couche est suffisamment épaisse pour assurer la protection.

Le document FR-2868 733 décrit un procédé de revêtement selon le préambule de la revendication 1. L'invention a pour objet la mise en oeuvre d'un procédé qui présente l'avantage du procédé précité, c'est-à-dire de permettre l'application d'une couche de matière ligneuse décorative sur une surface, même non développable, dans un procédé en une seule étape, sans cependant présenter les inconvénients dus aux défauts d'aspect apparaissant sous forme de fissures. Selon un perfectionnement, le procédé permet l'obtention du toucher et de l'aspect de la matière ligneuse, soit directement, soit après gravure lorsque la couche de revêtement est suffisamment épaisse pour assurer une bonne projection.

Plus précisément, on s'est rendu compte que, lorsqu'on utilise, pour le revêtement de la surface extérieure d'un support par une mince couche de matière ligneuse, une couche d'une composition transparente dont l'élasticité est supérieure d'au moins 5 %, et de préférence d'au moins 10 %, à celle de la mince couche de matière ligneuse, aussi bien en traction qu'en compression, cette couche extérieure élastique d'une part exerce sur des parties en saillie des forces de traction tangentes à la surface de la mince couche de matière ligneuse, qui garde ainsi sa cohésion, et sont réparties sur toute cette surface, et d'autre part exerce sur des parties en creux des forces de compression qui s'opposent à la formation de plis, de sorte que le côté apparent de la couche de matière ligneuse ne présente ni fissures, ni plis visibles.

Un tel procédé présente de nombreux avantages. D'abord, il évite l'utilisation d'opérations manuelles. En effet, la formation du complexe matière ligneuse-composition transparente s'effectue lorsque la couche de matière ligneuse est à plat ou lorsqu'elle passe sur un cylindre, et peut donc être facilement revêtue dans un procédé industriel. Un autre avantage est dû au fait que la fabrication de la pièce finie, depuis la pièce non revêtue jusqu'à l'obtention de la pièce revêtue du complexe matière ligneuse-composition, ne nécessite qu'une seule opération dans une presse. Un autre avantage est qu'aucune retouche n'est nécessaire après la fabrication. Un autre avantage est que la surface de la pièce finie peut avoir un toucher semblable à celui de la matière ligneuse.

Plus précisément, l'invention concerne un procédé de revêtement d'une surface d'une pièce par une mince couche de matière ligneuse, du type qui comprend la sélection d'une feuille de revêtement constituée au moins partiellement d'une mince couche de matière ligneuse destinée à être apparente dans la pièce finie, le revêtement de la surface de la feuille par une mince couche d'une composition contenant une résine de synthèse, et la fixation de la feuille revêtue à la surface de la pièce ; selon l'invention, dans l'étape de fixation de la feuille revêtue, la couche de composition déposée à la surface de la feuille possède une élasticité supérieure d'au moins 5 %, et de préférence d'au moins 10 %, à celle de la mince couche de matière ligneuse dans toutes les directions, et la couche de composition est transparente afin que la couche de matière ligneuse soit visible à travers la couche de composition. Selon l'invention, le procédé comprend, après l'étape de revêtement de la surface de la feuille par une mince couche d'une composition contenant une résine de synthèse, une étape de cuisson au moins partielle de la composition. Dans un mode de réalisation, l'étape de fixation de la feuille revêtue à la surface de la pièce comprend une étape de compression de la feuille revêtue contre la surface de la pièce.

Dans un autre mode de réalisation, l'étape de fixation de la feuille revêtue à la surface de la pièce comprend une étape de disposition de la feuille revêtue dans un moule avec la couche de composition transparente contre une surface du moule, et une étape d'injection dans le moule, du côté de la mince couche de matière ligneuse, d'une matière plastique destinée à constituer le corps de la pièce.

De préférence, avant l'étape de compression de la feuille revêtue contre la surface de la pièce, un adhésif est disposé entre la feuille revêtue et la surface de la pièce.

L'étape de sélection d'une feuille de revêtement comprend la sélection d'une feuille choisie parmi une feuille formée entièrement de matière ligneuse et une feuille formée de matière ligneuse disposée sur un support souple.

De préférence, après l'étape de revêtement de la surface de la feuille et avant la fixation de la feuille revêtue à la surface de la pièce, le procédé comprend une étape de découpe d'un flan à une configuration qui correspond à celle de la surface de la pièce à revêtir.

L'invention est particulièrement avantageuse lorsque la surface de la pièce n'est pas plane, par exemple n'est pas développable. Dans ce cas, l'étape de sélection d'une feuille de revêtement comprend avantageusement la sélection d'une feuille qui peut être courbée à un rayon de 15 mm dans toutes les directions sans fissuration de la matière ligneuse.

De préférence, l'étape de revêtement est choisie parmi une étape de revêtement réalisée à plat sur une couche de matière ligneuse et une étape de revêtement réalisée lors du passage de la couche de matière ligneuse sur un cylindre.

De préférence, l'étape de revêtement est choisie parmi une étape de revêtement réalisée par application au rouleau, une étape de revêtement réalisée par projection, et une étape de revêtement au rideau.

De préférence, la composition transparente est choisie parmi les vernis et les laques.

Dans une variante, la composition transparente est teintée, par exemple pour modifier la couleur apparente de la matière ligneuse.

Selon un perfectionnement particulièrement avantageux, le procédé comprend, après le revêtement de la surface de la feuille par une mince couche d'une composition contenant une résine de synthèse, une étape de gravure de la surface de composition transparente opposée à la couche de matière ligneuse.

De préférence, l'étape de gravure de la surface de composition transparente est effectuée à l'aide d'un cylindre de gravure.

De préférence, l'étape de gravure est exécutée à un moment auquel la composition a déjà subi une partie au moins de l'étape de cuisson au moins partielle de la composition, par exemple une réticulation.

Il est avantageux que l'étape de fixation de la feuille revêtue à la surface de la pièce soit réalisée avec un chauffage à une température par exemple supérieure à 40 °C, notamment comprise entre 90 et 130 °C.

Bien entendu, les diverses étapes du procédé, qui peuvent être chacune connue indépendamment des autres, sont mises en oeuvre dans des conditions que connaissent les hommes du métier spécialisés dans la fabrication de pièces revêtues de matière ligneuse.

Dans le présent mémoire, on utilise le terme "transparente" pour qualifier la nature de la couche de composition, mais ce terme recouvre aussi l'expression "au moins translucide", puisque le dessin de la matière ligneuse peut aussi apparaître à travers une telle couche translucide.

Dans le présent mémoire, le terme "élasticité" désigne l'élasticité en traction et en compression, car ce sont essentiellement les forces de traction qui réduisent les fissures et les forces de compression qui réduisent les plis.

On considère maintenant plus en détail les diverses caractéristiques de l'invention.

La mince couche de matière ligneuse, considérée comme étant du bois dans la suite, peut être entièrement formée de bois ou peut être constituée d'une mince couche de bois portée par un support souple, tel qu'une matière textile, notamment un tissu ou un non-tissé, un papier ou une mince feuille de caoutchouc.

L'épaisseur de la mince couche de bois dépend évidemment du plus petit rayon de courbure que doit prendre la feuille de revêtement dans la pièce finie, et de la nature du bois. Par exemple, lors du revêtement d'une surface non développable, il est avantageux que la mince couche puisse être courbée à un rayon de 15 mm dans toutes les directions sans fissuration du bois avant tout traitement selon l'invention. La nature du bois dépend d'une part de l'essence qui est plus ou moins souple ou rigide selon l'origine et le traitement du bois et d'autre part de la présentation de la couche, c'est-à-dire du fait que celle-ci est continue ou est formée de morceaux adjacents, et de la direction de sa coupe, de préférence suivant le fil du bois.

Le revêtement de la feuille peut être réalisé soit à plat, par exemple par un dispositif à rouleau, par projection ou par passage dans un rideau de la composition, soit sur un cylindre, par exemple par un rouleau appliqué le long d'une génératrice du cylindre, avec interposition de la feuille de revêtement. Le revêtement sur cylindre peut aussi être réalisé par projection.

La résine de synthèse peut être à base d'ingrédients naturels ou pétrochimiques. Selon l'invention l'étape de revêtement de la couche de bois soit une enduction, c'est-à-dire que la composition imprègne le bois pour bien être accrochée afin qu'elle répartisse bien les contraintes. Dans une variante, il est avantageux, pour certaines compositions, d'appliquer à la surface du bois, avant le revêtement par la composition transparente, une couche d'accrochage, souvent appelée "primer" ou "primaire". Les deux opérations peuvent en outre se cumuler.

Lorsque le composition transparente, qui est appliquée au rouleau, par projection ou au rideau, a des propriétés insuffisantes d'élasticité selon l'invention, elle doit alors subir un traitement préalable, par exemple une cuisson partielle. Par exemple, une telle composition peut subir une polymérisation par cuisson afin que la couche de revêtement possède l'élasticité nécessaire au procédé de l'invention, c'est-à-dire possède une élasticité supérieure d'au moins 5 %, et de préférence d'au moins 10 %, à celle de la mince couche de bois dans toutes les directions.

Bien que la composition transparente appliquée sur le bois soit de préférence d'un type qui n'a pas d'action chimique sur l'aspect du bois, ses ingrédients de base peuvent être de nature chimique très variable. Selon l'invention, il faut que la composition puisse être mise à un état physique tel qu'elle présente l'élasticité nécessaire lorsque le complexe est mis en forme, par exemple dans un moule.

Dans un exemple, on peut par exemple utiliser comme composition transparente un vernis ayant une composition à base de polyuréthanne bi-composant. Elle est de préférence appliquée sur une couche d'accrochage de type classique. L'épaisseur de la couche de composition transparente après cuisson est avantageusement comprise entre 20 et 100 □m. Le complexe bois-vernis subit une cuisson de 30 min à 80 °C, avant s a mise en forme, par exemple par compression.

Selon un perfectionnement éventuel, la surface de composition transparente opposée à la couche de bois, soit après la cuisson, soit au cours de celle-ci, subit une étape de gravure de la surface opposée à la couche de bois afin que la surface la plus à l'extérieur dans la pièce finie présente par exemple un grain ou un motif imitant les limites des couches de bois coupé. Par exemple, l'étape de gravure de la surface de composition transparente est effectuée à l'aide d'un rouleau ayant une surface de gravure. Ainsi, la couche de composition formée sur la pièce finie peut posséder une épaisseur suffisante pour assurer une bonne protection, tout en donnant le toucher du bois et l'aspect de celui-ci grâce à la transparence de la composition.

L'étape de fixation de la feuille revêtue à la surface de la pièce est effectuée par compression de la feuille revêtue contre la surface de la pièce. Lorsque la surface de la pièce n'est pas plane, par exemple n'est pas développable, l'opération est de préférence effectuée dans un moule fermé par une presse chauffante.

Plus précisément, la compression comprend la mise du complexe, constitué par la feuille de revêtement et la composition transparente, à la surface de la pièce non revêtue, avec interposition d'une composition adhésive destinée à fixer le complexe à la pièce. Cette composition adhésive peut être de type quelconque connu dans la mesure où elle assure un collage suffisant dans les conditions de température et de pression utilisées dans l'étape de compression. Les fournisseurs de telles compositions adhésives donnent ces propriétés, si bien que l'homme du métier peut facilement sélectionner une colle convenable d'après les indications des fabricants et les caractéristiques de la pièce et du complexe.

La mise de la feuille de revêtement à la forme de la pièce, ayant par exemple une surface non développable, s'effectue lors de la compression dans laquelle la mince couche de bois se met à la forme de la surface et, simultanément, la couche transparente exerce à la surface du bois, dans le plan de la surface de la couche de bois, des forces d'élasticité qui s'opposent à la formation de fissures dans les portions courbes convexes et à la formation de plis dans les portions courbes concaves. Cette opération de compression est avantageusement réalisée à une température supérieure à 40 °C et avantageusement comprise entre 90 °C et 130 °C.

Lorsque la pièce revêtue sort de la presse, on peut constater d'une part que la surface du bois ne présente ni plis, ni fissures visibles, et d'autre part que la surface extérieure de composition a un toucher agréable, analogue à celui du bois, surtout lorsque le complexe a subi l'opération de gravure. La pièce peut être utilisée telle quelle. Lorsque la pièce n'a pas subi l'opération de gravure, ses propriétés de toucher dépendent de l'état de surface de la couche de composition transparente (lisse, satinée, mate), et de l'état de surface de la couche de bois. Selon l'invention, la compression de la feuille revêtue contre la surface de la pièce est réalisée par disposition de la feuille revêtue dans un moule de manière que la couche de composition transparente soit adjacente à une surface d'un demi-moule, par fermeture d'un second demi-moule sur le premier, et par injection dans le moule, du côté de la mince couche de bois, d'une matière plastique destinée à constituer le corps de la pièce. Bien entendu, un tel procédé n'est envisageable que lorsque la température d'injection de la matière plastique ne risque pas de provoquer une détérioration des propriétés du complexe bois-composition transparente.

Après l'étape de fixation, la couche transparente peut être laissée à un état souple et élastique ; cependant, selon l'invention puisqu'elle maintient la surface du bois en empêchant la formation de fissures et de plis, elle subit une étape supplémentaire, de polymérisation plus poussée lorsque la cuisson n'a assuré qu'une pré-polymérisation. Dans cette opération, la surface de la couche de bois n'a pas la faculté de créer de fissures puisqu'elle est maintenue en permanence à la forme obtenue par application de forces réparties sur toute la surface.

Bien qu'on ait décrit l'invention dans son application à une pièce de garniture intérieure d'automobile, le procédé s'applique également à d'autres domaines, par exemple aux meubles, aux agencements intérieurs, aux bateaux ou aux agencements d'avion par exemple.

Bien qu'on ait décrit le procédé de gravure de la surface de composition comme un perfectionnement du procédé de revêtement d'une surface, plane ou non, par une couche de composition transparente qui possède une élasticité supérieure d'au moins 5 %, et de préférence d'au moins 10 %, à celle de la mince couche de matière ligneuse dans toutes les directions, ce procédé de gravure s'applique aussi à des couches non transparentes et/ou à des couches qui ne possèdent pas une élasticité supérieure d'au moins 5 % à celle de la mince couche de matière ligneuse dans toutes les directions.

La description qui précède indique que toutes les opérations peuvent être exécutées de manière industrielle, sans étape manuelle. En conséquence, les pièces à surface non développable revêtues obtenues peuvent avoir un faible coût, bien que l'aspect obtenu soit excellent et souvent meilleur que celui que donnent les procédés manuels.

## Revendications

1. Procédé de revêtement d'une surface d'une pièce par une mince couche de matière ligneuse, du type qui comprend :
- la sélection d'une feuille de revêtement constituée au moins partiellement d'une mince couche de matière ligneuse destinée à être apparente dans la pièce finie,
- le revêtement de la surface de la feuille par une mince couche d'une composition contenant une résine de synthèse, de sorte à ce que la composition imprègne la feuille de revêtement, et
- la fixation de la feuille revêtue à la surface de la pièce,
**caractérisé en ce que**
dans l'étape de fixation de la feuille revêtue, la couche de composition déposée à la surface de la feuille possède une élasticité supérieure d'au moins 5 %, et de préférence d'au moins 10 %, à celle de la mince couche de matière ligneuse dans toutes les directions, et
la couche de composition est transparente afin que la couche de matière ligneuse soit visible à travers la couche de composition.
après l'étape de revêtement de la surface de la feuille par une mince couche d'une composition contenant une résine de synthèse, une étape de cuisson partielle de la composition assurant une pré-polymérisation de la composition et après l'étape de fixation, une étape de polymérisation plus poussée de la composition.

3. Procédé selon l'une des revendications 1 et 2, **caractérisé en ce que** la surface de la pièce n'est pas plane.

4. Procédé selon l'une quelconque des revendications précédentes, **caractérisé en ce que** l'étape de fixation de la feuille revêtue à la surface de la pièce comprend une étape de compression de la feuille revêtue contre la surface de la pièce.

5. Procédé selon l'une quelconque des revendications 1 à 3, **caractérisé en ce que** l'étape de fixation de la feuille revêtue à la surface de la pièce comprend une étape de disposition de la feuille revêtue dans un moule avec la couche de composition transparente contre une surface du moule, et une étape d'injection dans le moule, du côté de la mince couche de matière ligneuse, d'une matière plastique destinée à constituer le corps de la pièce.

6. Procédé selon l'une quelconque des revendications précédentes, **caractérisé en ce que** l'étape de sélection d'une feuille de revêtement comprend la sélection d'une feuille qui peut être courbée à un rayon de 15 mm dans toutes les directions sans fissuration de la matière ligneuse.

7. Procédé selon l'une quelconque des revendications précédentes, **caractérisé en ce que** l'étape de revêtement est choisie parmi une étape de revêtement réalisée à plat sur une couche de matière ligneuse et une étape de revêtement réalisée lors du passage de la couche de matière ligneuse sur un cylindre.

8. Procédé selon l'une quelconque des revendications précédentes, **caractérisé en ce que** l'étape de revêtement est choisie parmi une étape de revêtement réalisée par application au rouleau, une étape de revêtement réalisée par projection, et une étape de revêtement au rideau.

9. Procédé selon l'une quelconque des revendications précédentes, **caractérisé en ce qu'**il comprend, après le revêtement de la surface de la feuille par une mince couche d'une composition contenant une résine de synthèse, une étape de gravure de la surface de composition transparente opposée à la couche de matière ligneuse.

## Patentansprüche

1. Verfahren zum Beschichten einer Oberfläche eines Teils durch eine dünne Holzschicht, der Art, die umfasst:
- Auswählen einer Beschichtungshaut, die zumindest teilweise aus einer dünnen Schicht eines Holzmaterials gebildet ist, die vorgesehen ist, an dem fertigen Teil sichtbar zu sein,
- Beschichten der Fläche der Haut mit einer dünnen Schicht einer Zusammensetzung, die ein Kunstharz enthält, derart, dass die Zusammensetzung die Beschichtungshaut imprägniert, und
- Befestigen der beschichteten Haut an der Oberfläche des Teils,
**dadurch gekennzeichnet, dass**
bei dem Schritt des Befestigens der beschichteten Haut die Schicht der Zusammensetzung, die auf der Oberfläche der Haut abgeschieden ist, eine Elastizität um mindestens 5% und vorzugsweise mindestens 10% größer als die der dünnen Schicht aus Holzmaterial in allen Richtungen besitzt, und
die Schicht der Zusammensetzung transparent ist, damit die Schicht aus Holzmaterial durch die Schicht der Zusammensetzung hindurch sichtbar ist,
nach dem Schritt des Beschichtens der Oberfläche der Haut mit einer dünnen Schicht einer Kunstharz enthaltenden Zusammensetzung ein Schritt des teilweisen Härtens der Zusammensetzung, der die Präpolymerisation der Zusammensetzung sicherstellt, und nach dem Schritt des Befestigens ein Schritt der weiteren Polymerisation der Zusammensetzung vorgesehen ist.

2. Verfahren nach Anspruch 1, **dadurch gekennzeichnet, dass** die Fläche des Teils nicht eben ist.

3. Verfahren nach einem beliebigen der vorhergehenden Ansprüche, **dadurch gekennzeichnet, dass** der Schritt des Befestigens der beschichteten Haut an der Oberfläche des Teils einen Schritt des Pressens der beschichteten Haut gegen die Oberfläche des Teils umfasst.

4. Verfahren nach einem beliebigen der Ansprüche 1 bis 2, **dadurch gekennzeichnet, dass** der Schritt des Befestigens der beschichteten Haut an der Oberfläche des Teils einen Schritt des Anordnens der beschichteten Haut in einer Form, wobei die transparente Schicht der Zusammensetzung gegen eine Fläche der Form gelegt wird, und einen Schritt des Einspritzens eines Kunststoffmaterials in die Form von der Seite der dünnen Schicht aus Holzmaterial umfasst, wobei das Kunststoffmaterial vorgesehen ist, den Körper des Teils zu bilden,.

5. Verfahren nach einem beliebigen der vorhergehenden Ansprüche, **dadurch gekennzeichnet, dass** der Schritt des Auswählens eine Beschichtungshaut das Auswählen einer Haut umfasst, die bei einem Radius von 15 mm in alle Richtungen ohne Rissbildung gebogen werden kann.

6. Verfahren nach einem beliebigen der vorhergehenden Ansprüche, **dadurch gekennzeichnet, dass** der Schritt des Beschichtens ausgewählt ist aus einem Beschichtungsschritt, der eben auf eine Schicht aus Holzmaterial realisiert wird, und einem Beschichtungsschritt, der bei dem Durchlauf der Schicht aus Holzmaterial auf einem Zylinder realisiert wird.

7. Verfahren nach einem beliebigen der vorhergehenden Ansprüche, **dadurch gekennzeichnet, dass** der Schritt des Beschichtens ausgewählt ist aus einem Beschichtungsschritt, der durch Walzenauftrag realisiert wird, einem Beschichtungsschritt, der durch Sprühen realisiert wird und einem Schritt des Vorhangbeschichtens realisiert wird.

8. Verfahren nach einem beliebigen der vorhergehenden Ansprüche, **dadurch gekennzeichnet, dass** es nach dem Beschichten der Fläche der Haut mit einer dünnen Schicht einer Kunstharz enthaltenden Zusammensetzung einen Schritt des Gravierens der Fläche der transparenten Zusammensetzung entgegengesetzt zur Schicht aus Holzmaterial umfasst.

## Claims

1. Method for coating a surface of a component with a thin layer of ligneous material, of the type comprising :
- selecting a sheet of coating constituted at least partially by a thin layer of ligneous material which is intended to be visible in the finished component,
- coating the surface of the sheet with a thin layer of a composition which contains a synthetic resin such that the composition impregnates the sheet of coating, and
- fixing the coated sheet to the surface of the component,
**characterised in that**,
in the step of fixing the coated sheet, the layer of composition deposited on the surface of the sheet has a resilience at least 5% greater, and preferably at least 10% greater, than that of the thin layer of ligneous material in all directions, and
the composition layer is transparent so that the layer of ligneous material is visible through the composition layer, after the step of coating the surface of the sheet with a thin layer of a composition which contains a synthetic resin, a step of partially baking the composition for pre-polymerizing the composition and after the step of fixing, a step of further polymerizing the composition.

2. Method according to either claim 1, **characterised in that** the surface of the component is not planar.

3. Method according to any one of the preceding claims, **characterised in that** the step of fixing the coated sheet to the surface of the component comprises a step of pressing the coated sheet against the surface of the component.

4. Method according to any one of claims 1 to 2, **characterised in that** the step of fixing the coated sheet to the surface of the component comprises a step of arranging the coated sheet in a mould with the layer of transparent composition against a surface of the mould and a step of injecting in the mould, at the side of the thin layer of ligneous material, a plastics material which is intended to constitute the body of the component.

5. Method according to any one of the preceding claims, **characterised in that** the step of selecting a coating sheet comprises selecting a sheet which may be curved with a radius of 15 mm in all directions without cracking of the ligneous material.

6. Method according to any one of the preceding claims, **characterised in that** the coating step is selected from a coating step which is carried out in the flat state on a layer of ligneous material and a coating step which is carried out when the layer of ligneous material moves over a cylinder.

7. Method according to any one of the preceding claims, **characterised in that** the coating step is selected from a coating step which is carried out by means of roller application, a coating step which is carried out by means of projection and a curtain coating step.

8. Method according to any one of the preceding claims, **characterised in that** it comprises, after coating the surface of the sheet with a thin layer of a composition which contains a synthetic resin, a step of engraving the surface of transparent composition opposite the layer of ligneous material.
